Europäisches Patentamt

European Patent Office

Office européen des brevets

(11) Veröffentlichungsnummer: **0 234 522**
**B1**

## (12) EUROPÄISCHE PATENTSCHRIFT

(45) Veröffentlichungstag der Patentschrift:
08.08.90

(21) Anmeldenummer: 87102431.1

(22) Anmeldetag: 20.02.87

(51) Int. Cl.⁵: **B29C 45/16**

(54) Düsenkopf zum wahlweisen Austreiben mehrerer verschiedener Kunststoffkomponenten aus einem zentralen Düsenmundstück.

(30) Priorität: 27.02.86 DE 3606298

(43) Veröffentlichungstag der Anmeldung:
02.09.87 Patentblatt 87/36

(45) Bekanntmachung des Hinweises auf die Patenterteilung:
08.08.90 Patentblatt 90/32

(84) Benannte Vertragsstaaten:
AT BE CH DE FR GB IT LI NL SE

(56) Entgegenhaltungen:
DE-B- 2 445 107
DE-C- 3 618 616
FR-E- 46 876
GB-A- 2 024 991

(73) Patentinhaber: Battenfeld GmbH, Scherl 10,
D-5882 Meinerzhagen(DE)

(72) Erfinder: Cyriax, Wilhelm, Ahornstrasse,
D-5882 Meinerzhagen 1(DE)

(74) Vertreter: Müller, Gerd et al, Patentanwälte
HEMMERICH-MÜLLER-GROSSE-POLLMEIER-MEY
Hammerstrasse 2, D-5900 Siegen 1(DE)

**Beschreibung**

Die Erfindung betrifft einen Düsenkopf zum wahlweisen Austreiben mehrerer verschiedener Kunststoffkomponenten aus einem zentralen Düsenmundstück, bei welchem in dem das Düsenmundstück tragenden bzw. aufweisenden Gehäuse ein Ventilhahn drehbar angeordnet ist, der verschiedene Durchströmkanäle enthält, über deren jeden ein bestimmter Spritzzylinder oder dergleichen von mehreren Plastifiziereinheiten mit dem Düsenmundstück in Verbindung bringbar ist.

Düsenköpfe dieser Funktionsweise und Bauart sind bereits bekannt durch die DE-OS 18 14 343 und die DE-AS 24 45 107. Hierbei ist jeweils der Ventilhahn im Gehäuse um eine Achse drehverstellbar gelagert, die sich im wesentlichen quer zur Längsachse des Düsenmundstücks erstreckt.

Diese Anordnung des Ventilhahns erfordert nicht nur die Anordnung des zugehörigen Stellantriebs seitlich neben dem Düsenkopf, sondern sie beeinträchtigt auch die optimale Zuordnung der verschiedenen Plastifiziereinheiten bzw. Spritzzylinder zum Düsenkopf.

Eine andere Unzulänglichkeit der bekannten Düsenköpfe besteht aber auch darin, daß die Massenströme aus den einzelnen Plastifiziereinheiten bzw. Spritzzylindern immer nur nacheinander in das Düsenmundstück eingeführt werden können, daß also jeweils der eine Massenstrom völlig abgesperrt wird, bevor der nächste Massenstrom in das Düsenmundstück eingeleitet werden kann. In vielen Fällen ist es jedoch erwünscht oder Bedingung, daß wenigstens zeitweilig eine gleichzeitige Materialzufuhr aus zwei verschiedenen Massenströmen in das Düsenmundstück gelangt.

Der Erfindung liegt daher einerseits die Aufgabe zugrunde, einen Düsenkopf der eingangs angegebenen Bauart so zu verbessern, daß der Stellantrieb für den Ventilhahn die optimale Zuordnung der verschiedenen Plastifiziereinheiten bzw. Spritzzylinder nicht beeinträchtigt. Darüber hinaus ist es aber auch die Aufgabe der Erfindung, den gattungsgemäßen Düsenkopf so auszubilden, daß er es möglich macht, zumindest zeitweilig Kunststoffmaterial aus zwei verschiedenen Masseströmen dem Düsenmundstück zuzuführen.

Zur Lösung der Hauptaufgabe ist nach dem Kennzeichen des Anspruchs 1 erfindungsgemäß vorgesehen, daß der Ventilhahn als achsparallel zum Düsenmundstück im Gehäuse verdrehbar gelagerter Revolverkörper ausgebildet ist, daß im Revolverkörper konzentrisch um seine Drehachse angeordnete Längskanäle vorgesehen sind, daß diese Längskanäle einerseits an einer dem Düsenmundstück zugewendeten Stirn- bzw. Endfläche des Revolverkörpers münden und einer daran anliegenden Sperrfläche des Gehäuses zugewendet sind, während sie andererseits je an einen Ringkanal angeschlossen sind und diese Ringkanäle sich in verschiedenen Längenbereichen am Außenumfang des Revolverkörpers befinden, und daß jeder Ringkanal ständig mit je einem Spritzzylinder oder dergleichen bzw. einer Spritzeinheit in Strömungsverbindung gehalten ist, während jeder Längskanal einzeln in Fluchtlage mit dem Düsenmundstück stellbar ist.

Durch diese Maßnahmen wird zugleich eine baulich günstige Ausgestaltung des Düsenkopfes erhalten.

Zur Lösung der weiteren Aufgabe ist erfindungsgemäß nach Anspruch 2 vorgesehen, daß jeder Längskanal an der Stirn- bzw. Endfläche des Revolverkörpers in je eine parallel zu dieser verlaufende längliche Nut an einem Ende einmündet, wobei die Nuten von diesem Ende aus in Dreh- bzw. Umfangsrichtung des Revolverkörpers verlaufend, an die Sperrfläche des Gehäuses anschließen. Wenn dabei gemäß Anspruch 3 die Nuten als konzentrisch um die Drehachse des Revolverkörpers orientierte Ringsegmente gestaltet sind sowie gemäß Anspruch 4 gleichzeitig die einander zugewendeten Enden zweier in Umfangsrichtung des Revolverkörpers benachbarter bzw. aufeinanderfolgender Nuten mit dem Düsenmundstück in Verbindung bringbar sind, kann eine gleichzeitige Zuführung von Material aus mehreren verschiedenen Massenströmen in das Düsenmundstück problemlos bewerkstelligt werden.

Eine besonders vorteilhafte Weiterbildungsmaßnahme wird in diesem Sinne nach Anspruch 5 darin gesehen, daß die einander zugewendeten Enden zweier in Umfangsrichtung des Revolverkörpers benachbarter bzw. aufeinanderfolgender Nuten lediglich durch einen nahezu schneidenartigen Steg voneinander getrennt sind.

Nach Anspruch 6 liegt es aber auch im Rahmen der Erfindung, daß die Nuten als spiralarmartig zur Drehachse des Revolverkörpers verlaufende Ringsegmente gestaltet sind, bei denen gemäß Anspruch 7 die einander benachbarten Enden zweier aufeinanderfolgender Ringsegmente sich, bezogen auf die Umfangsrichtung des Revolverkörpers, gegenseitig überlappen.

Schließlich können nach Anspruch 9 die Nuten auch gerade verlaufen, aber sekantial relativ zum Umfang des Revolverkörpers orientiert sein, wobei ihre je mit einem Längskanal in Verbindung stehenden Enden auf einem kleineren Kreisbogen liegen als ihre davon abgewendeten Enden.

In der Zeichnung ist der Gegenstand der Erfindung in Ausführungsbeispielen dargestellt. Es zeigen

Figur 1 in schematisch vereinfachter Längsschnitt-Darstellung einen erfindungsgemäßen Düsenkopf für Mehrkomponenten-Kunststoff-Spritzgießmaschinen,

Figur 2 einen Schnitt entlang der Linie II-II in Fig. 1,

Figur 3 einen Schnitt entlang der Linie III-III in Fig. 1,

Figur 4 einen Schnitt entlang der Linie IV-IV in Fig. 1,

Figur 5 einen Schnitt entlang der Linie V-V in Fig. 1,

Figur 6 einen der Fig. 2 entsprechenden Schnitt durch eine abgewandelte Bauart eines erfindungsgemäßen Düsenkopfes,

Figur 7 einen der Fig. 2 entsprechenden Schnitt durch eine weitere abgewandelte Bauart eines erfindungsgemäßen Düsenkopfes,

Figur 8 einen der Fig. 6 entsprechenden Schnitt durch eine wieder andere Bauart eines erfindungsgemäßen Düsenkopfes und

Figur 9 einen der Fig. 6 entsprechenden Schnitt durch eine noch andere Ausgestaltung eines erfindungsgemäßen Düsenkopfes.

In Fig. I der Zeichnung ist im Längsschnitt der Düsenkopf I einer Mehrkomponenten-Kunststoff-Spritzgießmaschine dargestellt. Er weist ein Gehäuse 2 mit einem zentralen Düsenmundstück 3 auf, dem innerhalb des Gehäuses 2 ein Ventilhahn 4 drehbar zugeordnet ist, welcher wiederum am hinteren Ende des Gehäuses 2 mit einem Stellantrieb 5 gekuppelt ist. Der Ventilhahn 4 ist dabei um eine parallel zur Längsmittelachse 6-6 des Düsenkopfes I verlaufende Achse 7-7 im Gehäuse 2 drehbar gelagert, wobei die beiden Achsen 6-6 und 7-7 relativ zueinander um das Maß 8 exzentrisch angeordnet sind. Der Ventilhahn 4 ist dabei als ein um die Achse 7-7 innerhalb des Gehäuses 2 verdrehbar angeordneter Revolverkörper ausgelegt, der mehrere, bspw. zwei Längskanäle 9 und I0 enthält, deren Achsen II bzw. I2 übereinstimmenden radialen Abstand von der Längsachse 7-7 aufweisen, welcher wiederum der Exzentrizität 8 zwischen der Längsachse 6-6 des Gehäuses 2 und der Längsachse 7-7 des Ventilhahns bzw. Revolverkörpers 4 entspricht.

Jeder Längskanal 9 und I0 mündet dabei an der dem Düsenmundstück 3 zugewendeten, ebenen Stirn- bzw. Endfläche I3 des Ventilhahns bzw. Revolverkörpers 4, wobei diese Stirn- bzw. Endfläche I3 einer ebenen Sperrfläche I4 innerhalb des Gehäuses 2 gegenüberliegt, an welcher das Düsenmundstück 3 im Gehäuse 2 ausmündet.

Durch Drehung mittels des Stellantriebs 5 kann jeder Längskanal 9 und I0 des Ventilhahns bzw. Revolverkörpers 4 für sich allein in Fluchtlage mit dem Düsenmundstück 3 gestellt werden, so daß er mit diesem unmittelbar korrespondiert.

Der Längskanal 9 ist andererseits an einen Ringkanal I5 angeschlossen, welcher in die Mantelfläche des Ventilhahns bzw. Revolverkörpers 4 eingearbeitet ist. In gleicher Weise hat der Längskanal I0 eine ständige Verbindung mit einem Ringkanal I6, der ebenfalls in die Mantelfläche des Ventilhahns bzw. Revolverkörpers 4 eingeformt ist. Die beiden Ringkanäle I5 und I6 befinden sich dabei in verschiedenen Längenbereichen am Außenumfang des Ventilhahns bzw. Revolverkörpers 4. Jeder derselben korrespondiert mit einem radialen Verbindungskanal I7 bzw. I8 im Gehäuse 2, an den wiederum der Spritzzylinder I9 bzw. 20 zweier verschiedener Plastifiziereinheiten 2I und 22 angeschlossen ist.

Die beiden Längskanäle 9 und I0 des Ventilhahns bzw. Revolverkörpers 4 können ständig mit Kunststoffschmelze von den Plastifiziereinheiten 2I und 22 beaufschlagt werden, wobei das Austreiben dieser Kunststoffschmelzen aus dem Düsenmundstück 3 jeweils dann stattfindet, wenn der betreffende Längskanal 9 bzw. I0 mit ihm korrespondiert.

Damit das Austreiben verschiedener Kunststoffkomponenten aus dem Düsenmundstück 3 praktisch ohne Zeitverzögerung unmittelbar aufeinanderfolgend stattfinden kann, ist es wichtig, daß jeder der beiden Längskanäle 9 und I0 an der Stirn- bzw. Endfläche I3 des Ventilhahns bzw. Revolverkörpers 4 in je eine parallel zu dieser verlaufende, längliche Nut 23 bzw. 24 einmündet. Diese Nuten 23 und 24 verlaufen dabei von dem Mündungsende des betreffenden Längskanals 9 und I0 aus in Dreh- bzw. Umfangsrichtung des Ventilhahns bzw. Revolverkörpers 4 und schließen sich folglich unmittelbar an die Sperrfläche I4 des Gehäuses 2 an.

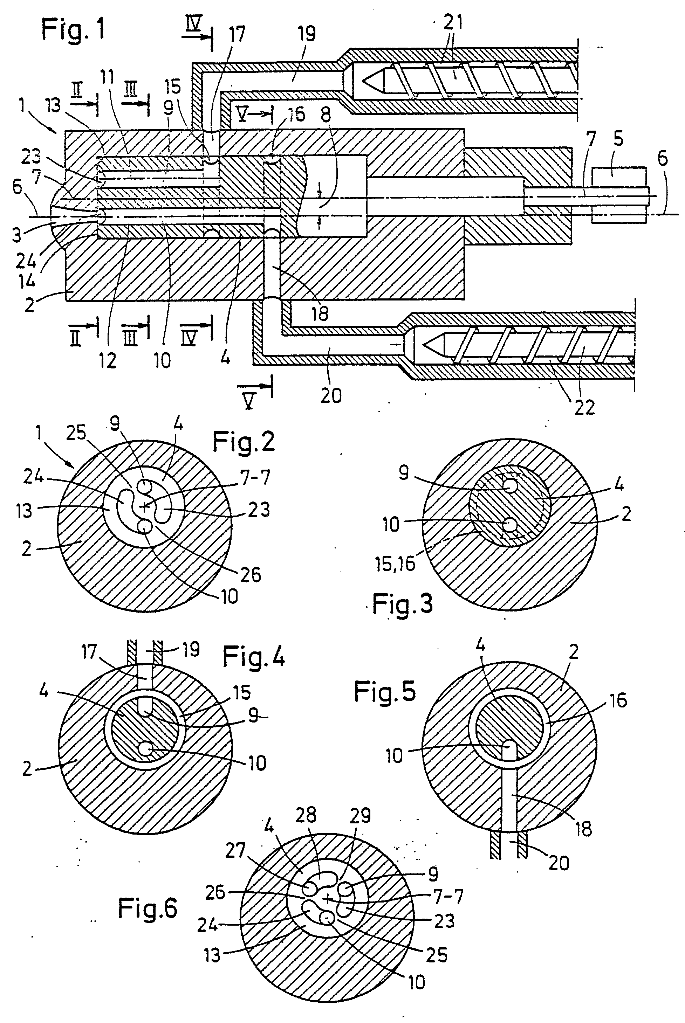

Aus Fig. 2 ergibt sich dabei, daß die länglichen Nuten 23 und 24 als konzentrisch um die Drehachse 7-7 des Ventilhahns bzw. Revolverkörpers 4 orientierte Ringsegmente gestaltet sind und eine solche Längenabmessung aufweisen können, daß die einander zugewendeten Enden zweier in Umfangsrichtung des Ventilhahns bzw. Revolverkörpers 4 benachbarter bzw. aufeinanderfolgender Nuten 23 und 24 lediglich durch einen nahezu schneidenartigen Steg 25 und 26 voneinander getrennt sind.

Auf diese Art und Weise besteht die Möglichkeit, gleichzeitig die einander zugewendeten Enden zweier aufeinanderfolgender Nuten 23 und 24 mit dem Düsenmundstück 3 in Strömungsverbindung zu bringen, so daß auch gleichzeitig in dieses zwei verschiedene Kunststoffkomponenten eingespeist werden können, wenn dies für wünschenswert gehalten wird oder aber für die Bildung optimaler Spritzlinge erforderlich ist.

Selbstverständlich ist es auch möglich, den Ventilhahn bzw. Revolverkörper 4 mit mehr als zwei Längskanälen 9 und I0, bspw. drei solchen Längskanälen 9, I0, 27 zu versehen, wie dies in Fig. 6 angedeutet ist. Hierbei sind dann an der Stirn- bzw. Endfläche des Ventilhahns bzw. Revolverkörpers 4 in entsprechender Weise auch drei verschiedene, in Drehrichtung desselben orientierte Nuten 23, 24, 28 vorhanden, deren einander benachbarten Enden durch die schneidenartigen Stege 25, 26, 29 voneinander getrennt sind.

In diesem Falle kann der Düsenkopf mit drei verschiedenen Spritzzylindern bzw. Plastifiziereinheiten zusammenarbeiten, d.h. es können drei verschiedene Kunststoffkomponenten jeweils nacheinander durch das Düsenmundstück 3 ausgetrieben werden, wobei jeweils zwei dieser Komponenten bedarfsweise auch zeitgleich in das Düsenmundstück 3 zuführbar sind.

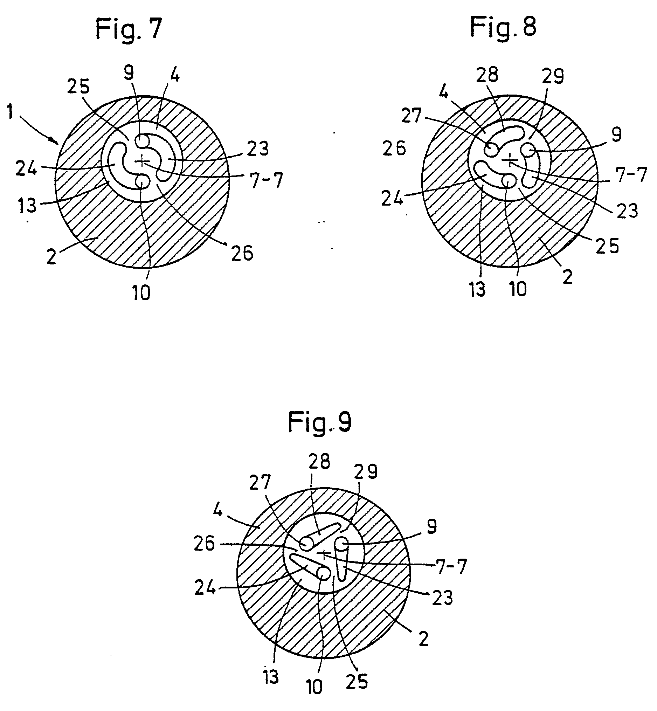

Erwähnenswert ist noch, daß die Nuten 23, 24 bzw. 23, 24, 28 an der Stirn-Endfläche I3 des Ventilhahns bzw. Revolverkörpers 4 gegebenenfalls auch spiralartig zur Drehachse des Revolverkörpers verlaufende Ringsegmente bilden können, wie das in den Fig. 7 und 8 dargestellt ist. Dabei können die einander benachbarten Enden zweier aufeinanderfolgender Ringsegmente sich, bezogen auf die Drehrichtung des Ventilhahns bzw. Revolverkörper 5, auch bereichsweise gegenseitig überlappen, wie das die Fig. 8 deutlich erkennen läßt. Auch hier durch wäre die Möglichkeit geboten, auf einfache Weise zeitweilig und gleichzeitig verschiedene Kunststoffkomponenten dem Düsenmundstück 3 zuzuführen.

Die Nuten 23 und 24 bzw. 23, 24, 28 brauchen auch keine in Drehrichtung des Ventilhahns bzw. Revolverkörpers 4 gekrümmte Gestaltung zu haben. Vielmehr können sie gegebenenfalls auch gerade, aber sekantial relativ, zum Umfang des Revolverkörpers orientiert werden, wie das in Fig. 9 dargestellt ist, wobei ihre je mit einem Längskanal 9, l0 bzw. 9, l0, 27 in Verbindung stehenden Enden auf einem kleineren Kreisbogen liegen als ihre davon abgewendeten Enden.

Schließlich wäre es aber auch noch möglich, die Nuten 23, 24 bzw. 23, 24, 28 so auszubilden, daß sich jeweils zu ihrem vom Mündungsbereich der Längskanäle 9, l0 bzw. 9, l0, 27 entfernten Ende hin allmählich verjüngen, wobei das verjüngte Ende unmittelbar neben dem an einen Längskanal anschließenden Ende der nachfolgenden Nut ausläuft, wie das ebenfalls die Fig. 9 erkennen läßt.

Diese Querschnittsänderung der Nuten 23, 24 bzw. 23, 24, 28 kann natürlich auch dort verwirklicht werden, wo diese bogenförmig gekrümmt verlaufen, wie das in den Fig. 2, 6, 7 und 8 gezeigt ist.

Durch die Formgebung der Nuten kann also die Art und Weise der Beschickung des Düsenmundstücks 3 mit verschiedenen Kunststoffkomponenten bedarfsabhängig beeinflußt werden.

## Patentansprüche

l. Düsenkopf zum wahlweisen Austreiben mehrerer verschiedener Kunststoffkomponenten aus einem zentralen Düsenmundstück, bei welchen in dem das Düsenmundstück tragenden bzw. aufweisenden Gehäuse ein Ventilhahn drehbar angeordnet ist, der verschiedene Durchströmkanäle enthält, über deren jeden eine bestimmter Spritzzylinder oder dergleichen von mehreren Plastifiziereinheiten mit dem Düsenmundstück in Verbindung bringbar ist, dadurch gekennzeichnet,
daß der Ventilhahn als achsparallel zum Düsenmundstück (3) im Gehäuse (2) verdrehbar gelagerter Revolverkörper (4) ausgebildet ist,
daß im Revolverkörper (4) konzentrisch um seine Drehachse (7-7) angeordnete Längskanäle (9, l0 bzw. 9, l0, 27) vorgesehen sind,
daß diese Längskanäle (9, l0 bzw. 9, l0, 27) einerseits an einer dem Düsenmundstück (3) zugewendeten Stirn- bzw. Endfläche (l3) des Revolverkörpers (4) münden und einer daran anliegenden Sperrfläche (l4) des Gehäuses (2) zugeordnet sind, während sie andererseits je an einen Ringkanal (l5, l6 bzw. l5, l6, ...) angeschlossen sind und diese Ringkanäle (l5, l6 bzw. l5, l6, ...) sich in verschiedenen Längenbereichen am Außenumfang des Revolverkörpers (4) befinden,
und daß jeder Ringkanal (l5, l6 bzw. l5, l6, ...) ständig mit je einem Spritzzylinder (l9, 20) bzw. einer Plastifiziereinheit (2l, 22) in Strömungsverbindung gehalten ist (l7, l8), während jeder Längskanal (9, l0 bzw. 9, l0, 27) einzeln in Fluchtlage (6-6) mit dem Düenmundstück (3) stellbar ist (5; Fig. l).

2. Düsenkopf nach Anspruch l, dadurch gekennzeichnet, daß jeder Längskanal (9, l0 bzw. 9, l0, 27) an der Stirn- bzw. Endfläche (l3) des Revolverkörpers (4) in je eine parallel zu dieser verlaufende, längliche Nut (23, 24 bzw. 23, 24, 28) an einem Ende einmündet, wobei die Nuten (23, 24 bzw. 23, 24, 28) von diesem Ende aus in Dreh- bzw. Umfangsrichtung des Revolverkörpers (4) verlaufend an die Sperrfläche (l4) des Gehäuses (2) anschließen (Fig. l).

3. Düsenkopf nach einem der Ansprüche l und 2, dadurch gekennzeichnet, daß die Nuten (23, 24 bzw. 23, 24, 28) als konzentrisch um die Drehachse (7-7) des Revolverkörpers (4) orientierte Ringsegmente gestaltet sind (Fig. 2 und 6).

4. Düsenkopf nach einem der Ansprüche l und 2, dadurch gekennzeichnet, daß gleichzeitig die einander zugewendeten Enden zweier in Umfangsrichtung des Revolverkörpers (4) benachbarter bzw. aufeinanderfolgender Nuten (23, 24 bzw. 23, 24; 24, 28; 28, 23) mit dem Düsenmundstück (3) in Verbindung bringbar sind (Fig. 2 und 6).

5. Düsenkopf nach einem der Ansprüche l bis 4, dadurch gekennzeichnet, daß die einander zugewendeten Enden zweier in Umfangsrichtung des Revolverkörpers (4) benachbarter bzw. aufeinanderfolgender Nuten (23, 24 bzw. 23, 24, 28) lediglich durch einen nahezu schneidenartigen Steg (25, 26 bzw. 25, 26, 29) voneinander getrennt sind (Fig. 2 und 6).

6. Düsenkopf nach einem der Ansprüche l und 2, dadurch gekennzeichnet, daß die Nuten (23, 24 bzw. 23, 24, 28) als spiralarmartig zur Drehachse (7-7) des Revolverkörpers (4) verlaufende Ringsegmente gestaltet sind.

7. Düsenkopf nach Anspruch 6, dadurch gekennzeichnet, daß die einander benachbarten Enden zweier aufeinanderfolgender Ringsegmente (23, 24 bzw. 23, 24, 28) sich, bezogen auf die Dreh- bzw. Umfangsrichtung des Revolverkörpers (4), gegenseitig überlappen.

8. Düsenkopf nach einem der Ansprüche l und 2, dadurch gekennzeichnet, daß die Nuten (23, 24 bzw. 23, 24, 28) gerade, aber sekantial relativ zum Umfang des Revolverkörpers (4) verlaufen, wobei ihre je mit einem Längskanal (9, l0 bzw. 9, l0, 27) in Verbindung stehenden Enden auf einem kleineren Drehkreis liegen als ihre davon abgewendeten Enden.

9. Düsenkopf nach einem der Ansprüche l bis 8, dadurch gekennzeichnet, daß die Nuten (23, 24 bzw. 23, 24, 28) sich von ihrem mit dem Längskanal (9, l0 bzw. 9, l0, 27) in Verbindung stehenden Ende aus zu ihrem anderen Ende hin in ihrer Breite und/oder Tiefe verringern.

## Revendications

1. Tête de tuyère permettant l'expulsion sélective de plusieurs composants différents d'une matière plastique à partir d'une embouchure de tuyère centrale et comportant, dans l'enveloppe qui porte ou comporte l'embouchure de tuyère, un robinet de soupape qui peut tourner et contient plusieurs conduits de passage dont chacun peut mettre en communication un cylindre d'injection déterminé ou des dispositifs analogues de plusieurs unités de plastification avec l'embouchure de la tuyère, caractérisée en ce que le robinet de soupape est un corps (4) du type revolver, d'axe parallèle à l'embouchure (3) de la tuyère et monté dans l'enveloppe (2) de manière à pouvoir tourner, en ce que ce corps (4) du type revolver comporte des conduits longitudinaux (9, 10 ou 9, 10, 27) disposés concentriquement autour de son axe de rotation (7-7), en ce que ces conduits longitudinaux (9, 10 ou 9, 10, 27) débouchent d'un côté au niveau d'une surface frontale terminale (13) du corps (4) du type revolver qui est la plus proche de l'embouchure (3) de la tuyère et est associée à une surface de fermeture (14) de l'enveloppe (2) qui s'applique contre elle, tandis que, de l'autre côté, ils se raccordent chacun à un conduit annulaire (15, 16 ou 15, 16, ...) et que les conduits annulaires en question (15, 16 ou 15, 16, ...) se trouvent dans différentes zones longitudinales à la périphérie extérieure du corps (4) de type revolver et en ce que chaque conduit annulaire (15, 16 ou 15, 16, ...) est maintenu constamment en communication (17, 18) pour l'écoulement, avec chaque cylindre d'injeciton (19, 20) ou avec une unité de plastification (21, 22) tandis que chaque conduit longitudinal (9, 10 ou 9, 10, 27) peut être placé individuellement dans l'alignement (6-6) de l'embouchure (3) de la tuyère (5, Figure 1).

2. Tête de tuyère selon la revendication 1, caractérisée en ce que chaque conduit longitudinal (9, 10 ou 9, 10, 27) débouche au niveau de la surface frontale terminale (13) du corps (4) de type revolver dans une rainure de forme allongée (23, 24 ou 23, 24, 28) orientée parallèlement à la surface en question, à l'une de ses extrémités, ces rainures (23, 24 ou 23, 24, 28) partant de cette extrémité dans le sens de la rotation ou de la périphérie du corps (4) de type revolver pour se raccorder à la surface de fermeture (14) de l'enveloppe (2) (Figure 1).

3. Tête de tuyère selon l'une des revendications 1 ou 2, caractérisée en ce que les rainures (23, 24 ou 23, 24, 28) sont constituées par des segments annulaires disposés concentriquement autour de l'axe de rotation (7-7) du corps (4) de type revolver (Figures 2 et 6).

4. Tête de tuyère selon l'une des revendications 1 ou 2, caractérisée en ce que les extrémités les plus proches l'une de l'autre de deux rainures (23, 24 ou 23, 24; 24, 28; 28, 23) voisines ou consécutives dans le sens de la périphérie de corps (4) de type revolver peuvent être mises simultanément en communication avec l'embouchure (3) de la tuyère (Figures 2 et 6).

5. Tête de tuyère selon une des revendications 1 à 4, caractérisée en ce que les extrémités les plus proches l'une de l'autre de deux rainures (23, 24 ou 23, 24, 28) voisines ou consécutives dans le sens de la périphérie du corps (4) de type revolver ne sont séparées l'une de l'autre que par une partie mince (25, 26 ou 25, 26, 29) constituant presque un tranchant (Figures 2 et 6).

6. Tête de tuyère selon l'une des revendications 1 ou 2, caractérisée en ce que les rainures (23, 24 ou 23, 24, 28) sont des segments annulaires disposés comme des bras de spirales par rapport à l'axe de rotation (7-7) du corps (4) de type revolver.

7. Tête de tuyère selon la revendication 6, caractérisée en ce que les extrémités voisines de deux segments annulaires (23, 24 ou 23, 24, 28) consécutifs se recouvrent dans le sens de la rotation ou de la périphérie du corps (4) de type revolver.

8. Tête de tuyère selon l'une des revendications, 1 ou 2, caractérisée en ce que les rainures (23, 24 ou 23, 24, 28) sont rectilignes, mais occupent une position de sécante par rapport à la périphérie du corps (4) du type revolver, de telle manière que leurs extrémités qui communiquent chacune avec un conduit longitudinal (9, 10 ou 9, 10, 27) se trouvent sur un cercle de rotation plus petit que leurs extrémités situées: à l'opposé.

9. Tête de tuyère selon une des revendications 1 à 8, caractérisée en ce que les rainures (23, 24 ou 23, 24, 28) diminuent de largeur et/ou de profondeur depuis leur extrémité qui les met en communication avec le conduit longitudinal (9, 10 ou 9, 10, 27) jusqu'à leur extrémité opposée.

## Claims

1. Nozzle head for the selectable ejection of several different synthetic material components from a central nozzle mouthpiece, in which nozzle head a valve cock, which contains different throughflow channels, by way of each of which a certain injection cylinder or the like of several plasticiser units is bringable into communication with the nozzle mouthpiece, is arranged to be rotatable in the housing carrying or displaying the nozzle mouthpiece, characterised thereby, that the valve cock is constructed as turret body (4) borne to be rotatable in the housing (2) parallelly to the axis of the nozzle mouthpiece (3), that longitudinal channels (9, 10 or 9, 10, 27) are provided in the turret body (4) and arranged concentrically around its rotational axis (7-7), that these longitudinal channels (9, 10 or 9, 10, 27) at one end open at a front or end face (13), which faces the nozzle mouthpiece (3), of the turret body (4) and are associated with a barrier surface (14) lying thereat of the housing (2), whilst they are each connected at the other end with a respective annular channel (15, 16 or 15, 16, ...) and these annular channels (15, 16 or 15, 16, ...) are situated in different length regions at the outer circumference of the turret body (4), and that each annular channel (15, 16 or 15, 16 ...) is kept constantly in flow communication with either a respective injection cylinder (19, 20) or a respective plasticiser unit (21, 22), whilst each longitudinal channel (9, 10 or 9, 10, 27) is settable (5; Fig. 1) individually into aligned position (6-6) with the nozzle mouthpiece (3).

2. Nozzle head according to claim 1, characterised thereby, that each longitudinal channel (9, 10 or 9, 10, 27) opens at the front or end face (13) of the turret body (4) into a respective elongate groove (23, 24 or 23, 24, 28), which extends parallelly thereto, at one end of the groove, wherein the grooves (23, 24 or 23, 24, 28) extend from this end in rotational or circumferential direction of the turrey body (4) and adjoin the barrier surface (14) of the housing (2) (Fig. 1).

3. Nozzle head according to one of the claims 1 and 2, characterised thereby, that the grooves (23, 24 or 23, 24, 28) are structured as annular segments oriented concentrically around the rotational axis (7–7) of the turret body (4) (Figs. 2 and 6).

4. Nozzle head according to one of the claims 1 and 2, characterised thereby, that the mutually facing ends of two grooves (23, 24 or 23, 24; 28, 23), which are neighbouring or successive in circumferential direction of the turret body (4), are bringable into communication with the nozzle mouthpiece (3) simultaneously (Figs. 2 and 6).

5. Nozzle head according to one of the claims, to 4, characterised thereby, that the mutually facing ends of two grooves (23, 24 or 23, 24, 28), which are neighbouring or successive in circumferential direction of the turret body (4), are each separated from the other merely by an almost knife-edge-like web (25, 26 or 25, 26, 29) (Figs. 2 and 6).

6. Nozzle head according to one of the claims 1 and 2, characterised thereby, that the grooves (23, 24 or 23, 24, 28) are structured as annular segments extending in the manner of spiral arms to the rotational axis (7–7) of the turret body (4).

7. Nozzle head according to claim 6, characterised thereby, that the mutually neighbouring ends of two successive annular segments (23, 24 or 23, 24, 28) mutually overlap with respect to the rotational or circumferential direction of the turret body (4).

8. Nozzle head according to one of the claims 1 and 2, characterised thereby, that the grooves (23, 24 or 23, 24, 28) extend rectilinearly, but secantially relative to the circumference of the turret body (4), wherein each of their ends standing in communication with a respective longitudinal channel (9, 10 or 9, 10, 27) lie on a smaller turning circle than their ends remote therefrom.

9. Nozzle head according to one of the claims 1 to 8, characterised thereby, that the grooves (23, 24 or 23, 24, 28) reduce in their width and/or depth from their ends standing in communication with the longitudinal channel (9, 10 to 9, 10, 27) towards their other ends.

Fig. 1

Fig. 2

Fig. 3

Fig. 4

Fig. 5

Fig. 6

## Fig. 7

## Fig. 8

## Fig. 9